# EUROPEAN PATENT APPLICATION

(11) **EP 4 235 896 A1**
(43) Date of publication of application: **30.08.2023**
(21) Application number: 22893993.0
(22) Date of filing: 13.04.2022
(51) Int. Cl.: H01M 10/0525, H01M 4/13

(54) **LITHIUM-ION BATTERY**

(30) Priority: 13.12.2021 CN 202111523012
(71) Applicant: SVOLT ENERGY TECHNOLOGY CO., LTD, Changzhou, Jiangsu 213200 (CN)
(72) Inventor: LI, Minglu, Changzhou, Jiangsu 213200 (CN); YANG, Hongxin, Changzhou, Jiangsu 213200 (CN); LIU, Jing, Changzhou, Jiangsu 213200 (CN)
(74) Representative: Puchberger & Partner Patentanwälte
(86) International application number: PCT/CN2022/086541
(87) International publication number: WO 2023/108963

(57) **Abstract**

The present disclosure provides a lithium-ion battery. The positive electrode plate meets the following requirements: 0.35 < (ln *Ds*)²/(D50 × CW × PD) < 11.95. This ensures that the dynamics of the positive and negative electrodes of the lithium-ion battery can achieve optimal matching in the fast charging process, ensure that the lithium-ion battery has a higher charging capacity, while ensuring that the lithium-ion battery has a good cycle service life and safety when it is used for long-term fast charging.

## Description

### TECHNICAL FIELD

The present disclosure relates to the field of batteries, for example relates to a lithium-ion battery.

### BACKGROUND

Lithium-ion battery refers to a secondary battery that can repeatedly deintercalate and intercalate lithium ions between the positive and negative electrodes, so it is also called as "rocking chair battery", which is a new type of green energy battery successfully developed in the 21^{st} century. Lithium-ion batteries are now mainly used in mobile phones, digital cameras, laptops, mobile power supplies and electric vehicles, among which the field of electric vehicles has broad prospects for development.

The current lithium-ion power battery has many advantages such as high energy density, high voltage, long cycle, long storage, no memory effect, high temperature resistance, cold resistance and so on. Generally, the structure of lithium-ion power battery is divided into winding type and laminated type. The order of bare cells is formed by alternating phases of positive electrode plate, separator and negative electrode plate in sequence, and then connected to the external pole, put into the cell shell such as steel shell, aluminum shell or aluminum plastic film, and electrolyte injected electrolyte to seal the finished cell. With the increasing demand for transportation tools and the acceleration of the pace of life, the demand for lithium-ion batteries as a new type of environmentally friendly energy is increasing day by day. Meanwhile, the cycle performance and charging speed performance of lithium-ion batteries are required to be further improved. Therefore, how to improve the fast charging performance of lithium-ion batteries, while ensuring their cycle performance and safety performance is an urgent technical problem to be solved.

### SUMMARY OF THE INVENTION

The present disclosure provides a lithium-ion battery.

In an embodiment, the present disclosure provides a lithium-ion battery, comprising a positive electrode plate, a negative electrode plate, a separator, and an electrolyte;
wherein the positive electrode plate meets the following requirements: 0.35 < (ln Ds)²/(D50 × CW × PD) < 11.95, such as 0.4, 0.5, 1, 1.5, 2, 2.5, 3, 3.5, 4, 4.5, 5, 5.5, 6, 6.5, 7, 7.5, 8, 8.5, 9, 9.5, 10, 10.5, 11, 11.5, 11.8 or 11.9, etc., wherein Ds is the solid-phase diffusion coefficient of lithium ions in the positive electrode plate, D50 is the median particle size of the positive active material in the positive electrode plate, CW is the surface density of the electrode layer in the positive electrode plate, and PD is the compacted density of the positive electrode plate.

In an embodiment provided by the present disclosure, the positive electrode plate comprises a positive active material, a conductive agent and a binder; in the positive electrode plate, the conductive agent includes but not limited to acetylene black, ketjen black, carbon nanotubes or graphene, etc., and the binder includes but not limited to polyvinylidene fluoride or polytetrafluoroethylene, etc.

In an embodiment provided by the present disclosure, the negative electrode plate comprises a negative active material, a conductive agent and a binder; in the negative electrode plate, the conductive agent includes but not limited to acetylene black, ketjen black, carbon nanotubes or graphene, etc., and the binder includes but not limited to styrene butadiene rubber, sodium carboxymethyl cellulose or polyacrylic acid, etc.

In an embodiment provided by the present disclosure, the preparation method of the provided positive and negative electrode plates is not defined, which can be obtained by using a conventional homogenization coating method.

In an embodiment provided by the present disclosure, there is no restriction on the source of the provided separator and electrolyte. Exemplarily, it can be a conventional product used in lithium-ion batteries.

In an embodiment provided by the present disclosure, by defining the relationship among the ion diffusion coefficient, surface density and compacted density of the positive electrode plate, the dynamics of the positive and negative electrodes of the lithium-ion battery can achieve optimal matching in the fast charging process, ensure that the lithium-ion battery has a higher charging capacity, while ensuring that the lithium-ion battery has a good cycle service life and safety when it is used for long-term fast charging.

The design of the positive electrode plate needs to combine the characteristics of ion diffusion coefficient of the positive electrode plate, and the material particle size, surface density and compacted density should be reasonably designed, so as to improve the diffusion rate of lithium ions in the positive electrode plate, and ensure that the lithium-ion battery has a higher charging capacity, while ensuring that the lithium-ion battery has a good cycle service life and safety when it is used for long-term fast charging.

In an embodiment, 1 < (ln *Ds*)²/(D50×CW×PD) < 9.8, such as 1.1, 1.5, 2, 2.5, 3, 3.5, 4, 4.5, 5, 5.5, 6, 8, 7, 7.5, 6.5, 8.5, 9, 9.5, 9.6 or 9.7, etc.

In an embodiment, Ds is in a range from 10⁻¹⁰cm²/S to 10⁻¹³cm²/S, such as 1×10⁻¹⁰cm²/S, 2×10⁻¹⁰cm²/S, 3×10⁻¹⁰cm²/S, 4×10⁻¹⁰cm²/S, 5×10⁻¹⁰cm²/S, 6×10⁻¹⁰cm²/S, 7×10⁻¹⁰cm²/S, 8×10⁻¹⁰cm²/S, 9×10⁻¹⁰cm²/S, 9.9×10⁻¹⁰cm²/S, 3×10⁻¹¹cm²/S, 4×10⁻¹¹cm²/S, 5×10⁻¹¹cm²/S, 1×10⁻¹²cm²/S, 2×10⁻¹²cm²/S, 6×10⁻¹²cm²/S, 7×10⁻¹²cm²/S, 8×10⁻¹²cm²/S, 9×10⁻¹²cm²/S, 1×10⁻¹³cm²/S, 2×10⁻¹³cm²/S, 3×10⁻¹³cm²/S, 4×10⁻¹³cm²/S, 5×10⁻¹³cm²/S, 6×10⁻¹³cm²/S, 7×10⁻¹³cm²/S, 8×10⁻¹³cm²/S, 9×10⁻¹³cm²/S or 9.9×10⁻¹³cm²/, etc.

In an embodiment provided by the present disclosure, if the Ds diffusion coefficient is relatively small, the diffusion rate of lithium ions of the material is slow, especially at high rates or low temperatures, which will further decrease, resulting in greater polarization of the battery, difficulty in lithium intercalation of the positive electrode, resulting in the direct reduction of some lithium ions on the surface of the negative electrode and the formation of lithium dendrites, resulting in the loss of the capacity of the lithium-ion battery. In addition, during the process of cyclic charging and discharging of lithium-ion batteries, the continuous growth of lithium dendrites will puncture the separator, forming a large safety hazard. In addition, the continuous growth of lithium dendrites also consumes too much lithium ions, and the capacity of lithium-ion batteries will decay too quickly during the cycle use.

In an embodiment, D50 is in a range from 2.5µm to 20µm, such as 2µm, 3µm, 4µm, 5µm, 6µm, 7µm, 8µm, 9µm, 10µm, 11µm, 12µm, 13µm, 14µm, 15µm, 16µm, 17µm, 18µm, 19µm or 20µm.

In one embodiment, D50 is in a range from 3µm to 13µm.

In an embodiment provided by the present disclosure, when the median particle size D50 of positive active material falls within the range of 3µm to 13µm, it can not only avoid too small particle size and electrolyte to produce more side reactions and affect the performance of lithium-ion battery, but also avoid too large particle size to hinder the transmission of lithium ions and affect the performance of lithium-ion battery.

In an embodiment, CW is in a range from 10mg/cm² to 30mg/cm², such as 10mg/cm², 11mg/cm², 12mg/cm², 13mg/cm², 14mg/cm², 15mg/cm², 16mg/cm², 17mg/cm², 18mg/cm², 19mg/cm², 20mg/cm², 21mg/cm², 22mg/cm², 23mg/cm², 24mg/cm², 25mg/cm², 26mg/cm², 27mg/cm², 28mg/cm², 29mg/cm² or 30mg/cm², etc.

In one embodiment, CW is in a range from 12 mg/cm² to 28mg/cm².

In an embodiment provided by the present disclosure, when the surface density CW falls within the range of 12 mg/cm² to 28mg/cm², the migration distance of lithium ions in the positive electrode diaphragm is shorter, which is conducive to improving the battery power characteristics. At the same time, it can increase the electrode current density and the battery energy density.

In one embodiment, PD is in a range from 2g/cm³ to 4.4g/cm³, such as 2g/cm³, 2.1g/cm³, 2.2g/cm³, 2.3g/cm³, 2.4g/cm³, 2.5g/cm³, 2.6g/cm³, 2.7g/cm³, 2.8g/cm³, 2.9g/cm³, 3g/cm³, 3.1g/cm³, 3.2g/cm³, 3.3g/cm³, 3.4g/cm³, 3.5g/cm³, 3.6g/cm³, 3.7g/cm³, 3.8g/cm³, 3.9g/cm³, 4g/cm³, 4.1g/cm³, 4.2g/cm³, 4.3g/cm³ or 4.4g/cm³, etc.

In one embodiment, PD is in a range from 2.8 g/cm³ to 3.6g/cm³.

In an embodiment provided by the present disclosure, when the compacted density PD falls within the range of 2.8~3.6g/cm³, the integrity of the positive active material particles is higher, which avoids the adverse reactions caused by rolling particles, and the electrical contact between particles is better, which is conducive to lithium ions migration.

In an embodiment, the positive electrode active material in the positive electrode plate comprises a lithium iron phosphate positive material and/or a ternary positive material.

In an embodiment, the chemical formula of the ternary positive material is LiₐNiₓCo_{y}M_{1-x-y}O₂, wherein 0.9 ≤ a ≤ 1.2, x > 0, y ≥ 0, z ≥ 0, and x+y+z=1, wherein M comprises any one or a combination of at least two of Mn, Al or W.

For example, the a may be 0.9, 0.95, 1, 1.05, 1.1, 1.15, or 1.2, and the x may be 0.1, 0.2, 0.3, 0.4, 0.5, 0.6, 0.7, 0.8, or 0.9, etc., the y may be 0, 0.1, 0.2, 0.3, 0.4, 0.5, 0.6, 0.7, 0.8 or 0.9, and the z may be 0, 0.1, 0.2, 0.3, 0.4, 0.5, 0.6, 0.7, 0.8 or 0.9, etc.

In an embodiment, the negative active material in the negative electrode plate comprises any one or a combination of at least two of graphite, hard carbon, or silicon oxide materials.

In an embodiment, the lithium-ion battery is a lithium-ion power battery.

Exemplarily, the preparation method of lithium-ion batteries provided in the present disclosure includes but not limited to the winding method and the stacking method, that is, the preparation method of the conventional lithium-ion battery, and both of which are applicable to the present disclosure.

### DETAILED DESCRIPTION

In an embodiment, the present disclosure provides a lithium-ion battery, comprising a positive electrode plate, a negative electrode plate, a separator, and an electrolyte;
wherein the positive electrode plate meets the following requirements: 0.35 < (ln Ds)²/(D50 × CW × PD) < 11.95, such as 0.4, 0.5, 1, 1.5, 2, 2.5, 3, 3.5, 4, 4.5, 5, 5.5, 6, 6.5, 7, 7.5, 8, 8.5, 9, 9.5, 10, 10.5, 11, 11.5, 11.8 or 11.9, etc., wherein Ds is the solid-phase diffusion coefficient of lithium ions in the positive electrode plate, D50 is the median particle size of the positive active material in the positive electrode plate, CW is the surface density of the electrode layer in the positive electrode plate, and PD is the compacted density of the positive electrode plate.

In an embodiment provided by the present disclosure, the positive electrode plate comprises a positive active material, a conductive agent and a binder; in the positive electrode plate, the conductive agent includes but not limited to acetylene black, ketjen black, carbon nanotubes or graphene, etc., and the binder includes but not limited to polyvinylidene fluoride or polytetrafluoroethylene, etc.

In an embodiment provided by the present disclosure, the negative electrode plate comprises a negative active material, a conductive agent and a binder; in the negative electrode plate, the conductive agent includes but not limited to acetylene black, ketjen black, carbon nanotubes or graphene, etc., and the binder includes but not limited to styrene butadiene rubber, sodium carboxymethyl cellulose or polyacrylic acid, etc.

In an embodiment provided by the present disclosure, the preparation method of the provided positive and negative electrode plates can be obtained by using a conventional homogenization coating method.

In an embodiment provided by the present disclosure, the source of the provided separator and electrolyte is a conventional product used in lithium-ion batteries.

In an embodiment provided by the present disclosure, by defining the relationship among the ion diffusion coefficient, surface density and compacted density of the positive electrode plate, the dynamics of the positive and negative electrodes of the lithium-ion battery can achieve optimal matching in the fast charging process, ensure that the lithium-ion battery has a higher charging capacity, while ensuring that the lithium-ion battery has a good cycle service life and safety when it is used for long-term fast charging. The design of the positive electrode plate needs to combine the characteristics of ion diffusion coefficient of the positive electrode plate, and the material particle size, surface density and compacted density should be reasonably designed, so as to improve the diffusion rate of lithium ions in the positive electrode plate, and ensure that the lithium-ion battery has a higher charging capacity, while ensuring that the lithium-ion battery has a good cycle service life and safety when it is used for long-term fast charging.

In an embodiment, 1 < (ln *Ds*)²/(D50×CW×PD) < 9.8.

In an embodiment, Ds is in a range from 10⁻¹¹ cm² to 10⁻¹³cm².

In an embodiment provided by the present disclosure, if the Ds diffusion coefficient is relatively small, the diffusion rate of lithium ions of the material is slow, especially at high rates or low temperatures, which will further decrease, resulting in greater polarization of the battery, difficulty in lithium intercalation of the positive electrode, resulting in the direct reduction of some lithium ions on the surface of the negative electrode and the formation of lithium dendrites, resulting in the loss of the capacity of the lithium-ion battery. In addition, during the process of cyclic charging and discharging of lithium-ion batteries, the continuous growth of lithium dendrites will puncture the separator, forming a large safety hazard. In addition, the continuous growth of lithium dendrites also consumes too much lithium ions, and the capacity of lithium-ion batteries will decay too quickly during the cycle use.

In an embodiment, D50 is in a range from 2.5µm to 20µm.

In an embodiment, D50 is in a range from 3µm to 13µm.

In an embodiment provided by the present disclosure, when the median particle size D50 of positive active material falls within the range of 3µm to 13µm, it can not only avoid too small particle size and electrolyte to produce more side reactions and affect the performance of lithium-ion battery, but also avoid too large particle size to hinder the transmission of lithium ions and affect the performance of lithium-ion battery.

In an embodiment, CW is in a range from 10 mg/cm² to 30mg/cm².

Further, in one embodiment, CW is in a range from 12 mg/cm² to 28mg/cm².

In an embodiment provided by the present disclosure, when the surface density CW falls within the range of 12 mg/cm² to 28mg/cm², the migration distance of lithium ions in the positive electrode diaphragm is shorter, which is conducive to improving the battery power characteristics. At the same time, it can increase the electrode current density and the battery energy density.

In an embodiment, PD is in a range from 2g/cm³ to 4.4g/cm³.

Furhter, in one embodiment, PD is in a range from 2.8 g/cm³ to 3.6g/cm³.

In an embodiment provided by the present disclosure, when the compacted density PD falls within the range of 2.8~3.6g/cm³, the integrity of the positive active material particles is higher, which avoids the adverse reactions caused by rolling particles, and the electrical contact between particles is better, which is conducive to lithium ions migration.

In an embodiment, the positive electrode active material in the positive electrode plate comprises a lithium iron phosphate positive material and/or a ternary positive material.

In an embodiment, the chemical formula of the ternary positive material is LiₐNiₓCo_{y}M_{1-x-y}O₂, wherein 0.9 ≤ a ≤ 1.2, x>0, y ≥ 0, z ≥ 0, and x+y+z=1, wherein M comprises any one or a combination of at least two of Mn, Al or W.

In an embodiment, the negative active material in the negative electrode plate comprises any one or a combination of at least two of graphite, hard carbon, or silicon oxide materials.

In an embodiment, the lithium-ion battery is a lithium-ion power battery.

For example, the preparation methods of lithium-ion batteries provided in the present disclosure including but not limited to the winding method and the stacking method, which are the preparation methods of conventional lithium-ion batteries, and both of them are applicable to the present disclosure.

### EXAMPLE 1

The present embodiment provides a lithium-ion battery comprising a positive electrode plate, a negative electrode plate, a separator and an electrolyte;

The following values of the positive electrode plate are as shown in Table 1: the Ds is the solid-phase diffusion coefficient of lithium-ions in the positive electrode plate, D50 is the median particle size of the positive active material in the positive electrode plate, CW is the surface density of the electrode layer in the positive electrode plate, PD is the compacted densityof the positive electrode plate and the result of (ln *Ds*)²/(D50×CW×PD).

The positive active material in the positive electrode plate is NCM111, the conductive agent is carbon nanotubes, and the binder is polytetrafluoroethylene.

The negative active material in the negative electrode plate is natural graphite, the conductive agent is carbon nanowires, and the binder is styrene butadiene rubber and sodium carboxymethyl cellulose;

The separator is polypropylene membrane and the electrolyte is (2mol/L LiPF₆, EC/EMC/MA).

The preparation method of the lithium-ion battery (comprising positive electrode plate and negative electrode plate) shall be carried out according to the specific implementation method:
The mass ratio of NCM111, carbon nanotubes and polytetrafluoroethylene in the positive electrode plate is 95:2.5:2.5;
The mass ratio of natural graphite, carbon nanowire, styrene butadiene rubber and sodium carboxymethyl cellulose in the negative electrode plate is 95:2:1:5:1.5.

### EXAMPLE 2

This example provides a lithium-ion battery, the positive electrode active material, Ds, D50, CW, PD and (ln *Ds*)²/(D50×CW×PD) are as shown in Table 1.

All the other preparation methods and parameters are consistent with those of Example 1.

### EXAMPLE 3

This example provides a lithium-ion battery, the positive electrode active material, Ds, D50, CW, PD and (ln *Ds*)²/(D50×CW×PD) are as shown in Table 1.

All the other preparation methods and parameters are consistent with those of Example 1.

### EXAMPLE 4

This example provides a lithium-ion battery, the positive electrode active material, Ds, D50, CW, PD and (ln *Ds*)²/(D50×CW×PD) are as shown in Table 1.

All the other preparation methods and parameters are consistent with those of Example 1.

### EXAMPLE 5

This example provides a lithium-ion battery, the positive electrode active material, Ds, D50, CW, PD and (ln *Ds*)²/(D50×CW×PD) are as shown in Table 1.

All the other preparation methods and parameters are consistent with those of Example 1.

### EXAMPLE 6

This example provides a lithium-ion battery, the positive electrode active material, Ds, D50, CW, PD and (ln *Ds*)²/(D50×CW×PD) are as shown in Table 1.

All the other preparation methods and parameters are consistent with those of Example 1.

### COMPARATIVE EXAMPLE 1

This comparative example provides a lithium-ion battery, the positive electrode active material, Ds, D50, CW, PD and (ln *Ds*)²/(D50×CW×PD) are as shown in Table 1.

All the other preparation methods and parameters are consistent with those of Example 1.

### COMPARATIVE EXAMPLE 2

This comparative example provides a lithium-ion battery, the positive electrode active material, Ds, D50, CW, PD and (ln *Ds*)²/(D50×CW×PD) are as shown in Table 1.

All the other preparation methods and parameters are consistent with those of Example 1.

The electrochemical performance of lithium-ion batteries provided in Examples 1-6 and Comparative Examples 1-2 was tested under the following conditions:
(1) Dynamic performance test: at 25°C, the lithium-ion batteries prepared by the Example and Comparative Examples were fully charged at 4C and fully discharged at 1C for 10 times, then the lithium-ion batteries were fully charged at 4C, and then the negative electrode plates were disassembled and the precipitation of lithium on the surface of the negative electrode plate was observed. Among them, if the area of lithium precipitation on the negative electrode surface is less than 5%, it is considered mild lithium precipitation; if the area of lithium precipitation on the negative electrode surface is 5-40%, it is considered moderate lithium precipitation; if the area of lithium precipitation on the negative electrode surface is greater than 40%, it is considered severe lithium precipitation.
(2) Cycle performance test: At 25°C, lithium-ion batteries prepared by Examples and Comparative Examples are charged at 3C rate and discharged at 1C rate, and the full discharge cycle test is carried out until the capacity of lithium-ion batteries decays to 80% of the initial capacity, and the number of cycles is recorded.

The results are shown in Table 1.

**Table 1**

| | Positive active material | Ds (cm²/S) | D50 (µm) | CW (mg/cm²) | PD (g/cm³) | (ln Ds)²/(D50 ×CW×PD) | Whether lithium is precipitated from the negative electrode | Cycle performance |
|---|---|---|---|---|---|---|---|---|
| Example 1 | NCM111 | 3×10⁻¹² | 10 | 17 | 3.5 | 1.18 | No lithium precipitated | 3000 cycle |
| Example 2 | NCM111 | 3×10⁻¹² | 10 | 19 | 3.3 | 11.26 | Mild lithium precipitation | 2000 cycle |
| Example 3 | NCM622 | 2×10⁻¹¹ | 10 | 17 | 3.5 | 1.02 | No lithium precipitated | 2500 cycle |
| Example 4 | NCM622 | 2×10⁻¹¹ | 10 | 19 | 3.3 | 0.97 | Mild lithium precipitation | 1500 cycle |
| Example 5 | NCM811 | 5.5×10⁻¹⁰ | 4 | 16 | 3.5 | 1.61 | No lithium precipitated | 2500 cycle |
| Example 6 | NCM811 | 2.5×10⁻¹⁰ | 13 | 20 | 3.6 | 0.42 | Moderate lithium precipitation | 1000 cycle |
| Comparative Example 1 | NCM811 | 2.5×10⁻¹⁰ | 20 | 30 | 3.6 | 0.33 | Severe lithium precipitation | 500 cycle |
| Comparative Example 2 | NCM111 | 3×10⁻¹² | 2 | 10 | 2.9 | 12.14 | No lithium precipitated | 1500 cycle |

As shown in Table 1, it can be seen that (ln *Ds*)²/(D50×CW×PD) is greater than 1 and less than 9.8, the migration rate of lithium ions is matched with the particle size of the positive material , the surface density of the positive electrode, and the compacted density of the positive electrode plate. Lithium ions can quickly deintercalate from the positive material and migrate rapidly in the positive electrode plate, and at the same time lithium ions can migrate rapidly in the positive electrode plate, the performance of the battery is more excellent, and the cycle life is improved while maintaining the cycle without lithium precipitation. It can achieve that the negative electrode is fully charged at 4C and discharged at 1C for 10 times, and then the lithium-ion battery is fully charged at 4C without lithium precipitation. When the battery is charged at a 3C rate and discharged at a 1C rate, it will decay to 80% of its initial capacity after at least 2500 cycles.

From the data results of Examples 2, 4 and 6 and Comparative Examples 1-2, it can be seen that, when (ln *Ds*)²/(D50×CW×PD) is too small, it will lead to a decrease in the migration rate of lithium ions in the positive active material or positive electrode plate. During the fast charging process, it will not be able to quickly intercalate into the negative electrode, leading to lithium precipitation from the negative electrode and a decrease in cycle life. When the ratio is too large, the particle size of the positive material is too small or the surface density and electrode compaction are too small, which will not cause lithium precipitation during cycling. On the one hand, it causes an increase in design costs, and on the other hand, when the particle size is too small, the side reactions increase during long-term cycling, leading to a decrease in cycling life.

Conclusion: In the present disclosure, by defining the relationship among the ion diffusion coefficient, surface density and compacted density of the positive electrode plate, the dynamics of the positive and negative electrodes of the lithium-ion battery can achieve optimal matching in the fast charging process, ensure that the lithium-ion battery has a higher charging capacity, while ensuring that the lithium-ion battery has a good cycle service life and safety when it is used for long-term fast charging.

## Claims

1. A lithium-ion battery, comprising a positive electrode plate, a negative electrode plate, a separator, and an electrolyte;
wherein the positive electrode plate meets the following requirements: 0.35 < (ln *Ds*)²/(D50 × CW × PD) < 11.95, wherein Ds is the solid phase diffusion coefficient of lithium ions in the positive electrode plate, D50 is the median particle size of the positive active material in the positive electrode plate, CW is the surface density of the electrode layer in the positive electrode plate, and PD is the compacted density of the positive electrode plate.

2. The lithium-ion battery of claim 1, wherein 1 < (ln *Ds)*²/ (D50 × CW × PD) < 9.8.

3. The lithium-ion battery of claim 1 or 2, wherein Ds is in a range from 10⁻¹⁰cm²/S to 10⁻¹³cm²/S.

4. The lithium-ion battery of any one of claims 1-3, wherein D50 is in a range from 2.5µm to 20 µm.

5. The lithium-ion battery of claim 4, wherein D50 is in a range from 3 µm to 13 µm.

6. The lithium-ion battery of any one of claims 1-5, wherein CW is in a range from 10mg/cm² to 30mg/cm².

7. The lithium-ion battery of claim 6, wherein CW is in a range from 12 to 28mg/cm².

8. The lithium-ion battery of any one of claims 1-7, wherein PD is in a range from 2 g/cm³ to 4.4g/cm³.

9. The lithium-ion battery of claim 8, wherein PD is in a range from 2.8g/cm³ to 3.6g/cm³.

10. The lithium-ion battery of any one of claims 1-9, wherein the positive active material in the positive electrode plate comprises a lithium iron phosphate positive material and/or a ternary positive material.

11. The lithium-ion battery of claim 10, wherein the chemical formula of the ternary positive material is LiₐNiₓCo_{y}M_{1-x-y}O₂, wherein 0.9 ≤ a ≤ 1.2, x>0, y ≥ 0, z ≥ 0, and x+y+z=1, M comprises any one or at least two combinations of Mn, Al or W.

12. The lithium-ion battery of any one of claims 1-11, wherein the negative active material in the negative electrode plate comprises any one or at least two combination of graphite, hard carbon or silicon oxide materials.

13. The lithium-ion battery of any one of claims 1-12, wherein the lithium-ion battery is a lithium-ion power battery.
